# EUROPÄISCHE PATENTSCHRIFT

(11) **EP 4 485 013 B1**
(45) Veröffentlichungstag und Bekanntmachung des Hinweises auf die Patenterteilung: **21.10.2026**
(21) Anmeldenummer: 23181937.6
(22) Anmeldetag: 28.06.2023
(51) Int. Cl.: G01V 8/20, G01V 8/22

(54) **LICHTSCHRANKENANORDNUNG**
LIGHT BARRIER
ENSEMBLE BARRIÈRE LUMINEUSE

(43) Veröffentlichungstag der Anmeldung: 01.01.2025
(73) Patentinhaber: Leuze electronic GmbH + Co. KG, 73277 Owen/Teck (DE)
(72) Erfinder: Hörderich, Johann, 82291 Mammendorf (DE)
(74) Vertreter: Ruckh, Rainer Gerhard

(56) Entgegenhaltungen:
- EP-A1- 4 092 449
- EP-B1- 2 278 359
- EP-B1- 3 614 182

## Beschreibung

Die Erfindung betrifft eine Lichtschrankenanordnung und ein Verfahren zur Erfassung von Objekten in einem Überwachungsbereich mittels einer Lichtschrankenanordnung.

Derartige Lichtschrankenanordnungen können im einfachsten Fall als Lichtschranken, insbesondere Einweglichtschranken ausgebildet sein. Eine derartige Lichtschranke weist einen Sender und einen Empfänger auf, die an gegenüberliegenden Rändern eines Überwachungsbereichs angeordnet sind. Bei freiem Überwachungsbereich werden vom Sender emittierte Lichtstrahlen ungehindert durch den Überwachungsbereich zum Empfänger geführt. Bei einem Objekteingriff wird der Strahlengang der Lichtstrahlen zum Empfänger wenigstens teilweise unterbrochen. In einer Auswerteeinheit erfolgt die Auswertung der Empfangssignale, so dass festgestellt wird, ob ein Objekteingriff im Überwachungsbereich vorliegt oder nicht und ein entsprechendes binäres Objektfeststellungssignal als Ausgangssignal generiert wird.

Bei bekannten Lichtstrahlen kann der Sender definierte Pulsfolgen emittieren. Werden diese Pulsfolgen empfangsseitig erkannt, liegt ein freier Überwachungsbereich vor.

Weiter bekannt sind auch Lichtschrankenanordnungen in Form von Lichtvorhängen. Ein solcher Lichtvorhang ist beispielsweise aus der EP 2 071 363 A2 bekannt. Der dort beschriebene Lichtvorhang umfasst eine Anzahl von Sendelichtstrahlen emittierenden Sendern aufweisende Sendereinheit und eine von der Sendereinheit elektrisch entkoppelten, eine Anzahl von Empfängern aufweisende Empfängereinheit. Jeweils ein Sender bildet mit einem Empfänger eine Strahlachse, wobei die Sender und Empfänger der einzelnen Strahlachsen zur Erfassung von Objekten in einem Überwachungsbereich zyklisch einzeln nacheinander aktiviert werden. Ein aktivierter Sender emittiert Sendelichtstahlen in Form von eine Pulsgruppe bildenden Pulsen.

Generell emittieren bei derartigen Lichtschrankenanordnungen der oder die Sender zyklisch in aufeinanderfolgenden Sendezeitfenstern einen Lichtpuls oder eine Folge von Lichtpulsen. In an die Sendezeitfenster angepassten Empfangszeitfenstern werden die Lichtpulse empfangsseitig registriert und zur Generierung des Objektfeststellungssignals ausgewertet.

Da die Auswertung in der Auswerteeinheit eine erhebliche Rechenzeit beansprucht, müssen die zeitlichen Abstände zwischen zwei Strahlachsen bzw. Empfangszeitfenstern entsprechend groß gewählt werden.

Dies wiederum führt zu einer unerwünscht hohen Reaktionszeit bei der Generierung des Objektfeststellungssignals.

Die EP 2 278 359 B1 (D1) betrifft ein Verfahren zum Betrieb wenigstens einer Lichtschranke, umfassend einen Sender und einen Empfänger, wobei bei freiem Strahlengang der Lichtschranke vom Sender mit einer Taktfrequenz emittierte Sendepulse auf den Empfänger auftreffen. Die im Empfänger der wenigstens einen Lichtschranke durch den Sendepuls generierten Empfangssignale werden digital gefiltert, in dem diese mit einer Abtastfrequenz mit mehreren Abtastungen asynchron zur Taktfrequenz des Senders abgetastet werden. Aus den bei den Abtastungen erhaltenen Messwerten wird ein Objektfeststellungssignal generiert.

Die EP 3 614 182 B1 (D2) betrifft eine Lichtschrankenanordnung zur Erfassung von Objekten in einem Überwachungsbereich, mit wenigstens einem Sender und wenigstens einem Empfänger an gegenüberliegenden Rändern des Überwachungsbereichs, wobei bei freiem Überwachungsbereich vom Sender emittierte Lichtstrahlen auf den Empfänger geführt sind, und mit einer Auswerteeinheit, die ausgebildet ist in Abhängigkeit von Empfangssignalen des Empfängers ein Objektfeststellungssignal zu generieren, wobei der Sender Lichtstrahlen in Form von Pulsfolgen mit wenigstens zwei durch eine Pulspause getrennten Lichtpulsen emittiert, und wobei die Auswerteeinheit ausgebildet ist eine Pulsfolge dadurch zu erkennen, dass als Maß für den Pulsabstand zwischen Lichtpulsen der Abstand der fallenden Flanken der Lichtpulse und/oder der Abstand der steigenden Flanken der Lichtpulse erfasst wird. Dabei erfolgt eine Auswahl der Auswertung des Abstands der fallenden Flanken der Lichtpulse und/oder des Abstands der steigenden Flanken der Lichtpulse abhängig von den Signalstärken der Lichtpulse.

Die EP 4 092 449 A1 betrifft eine Lichtschrankenanordnung zur Erfassung von Objekten in einem Überwachungsbereich, mit wenigstens einem Empfänger, wobei bei freiem Überwachungsbereich die Lichtstrahlen des Senders zum Empfänger geführt sind und bei einem Objekteingriff in den Überwachungsbereich der Strahlengang der Lichtstrahlen zumindest teilweise unterbrochen ist, und mit einer Auswerteeinheit, in welcher abhängig von Empfangssignalen des Empfängers ein Objektfeststellungssignal generiert wird. In der Auswerteeinheit werden abhängig von Empfangssignalen des Empfängers zumindest zwei unterschiedliche Ausrichtzustände ermittelt werden und in Abhängigkeit der Ausrichtzustände wird eine Ausrichtgüte ermittelt. Die Erfindung betrifft weiterhin ein Verfahren zur Erfassung von Objekten in einem Überwachungsbereich.

Der Erfindung liegt die Aufgabe zugrunde eine Lichtschrankenanordnung bereitzustellen, bei welcher mit kurzen Reaktionszeiten Objektfeststellungssignale generiert werden können.

Zur Lösung dieser Aufgabe sind die Merkmale des Anspruchs 1 vorgesehen. Vorteilhafte Ausführungen und zweckmäßige Weiterbildungen der Erfindung sind in den abhängigen Ansprüchen beschrieben.

Die Erfindung betrifft eine Lichtschrankenanordnung zur Erfassung von Objekten in einem Überwachungsbereich, mit wenigstens einem Sender, der Lichtstrahlen in Form von Lichtpulsen emittiert, und mit wenigstens einem Empfänger. Bei freiem Überwachungsbereich sind vom Sender emittierte Lichtstrahlen auf den Empfänger geführt. Bei einem Objekteingriff im Überwachungsbereich liegt eine Strahlunterbrechung der Lichtstrahlen vor. Die Lichtschrankenanordnung weist weiter eine Auswerteeinheit auf, in welcher in Abhängigkeit von Empfangssignalen des Empfängers ein Objektfeststellungssignal generiert wird. Die Auswerteeinheit weist eine Rechnereinheit und eine der Rechnereinheit nebengeordnete Rechnerstruktur auf. Die nebengeordnete Rechnerstruktur weist eine Empfangsschaltung auf, in welcher Empfangssignale in einem durch die Lichtpulse bestimmten Zeittakt erfasst werden. In der Auswerteeinheit erfolgt in Zeitintervallen, die unabhängig vom Zeittakt der Erfassung der Empfangssignale vorgegeben sind, die Auswertung der Empfangssignale und die Generierung des Objektfeststellungssignals.

Die Erfindung betrifft auch ein entsprechendes Verfahren zum Betrieb einer Lichtschrankenanordnung.

Die Auswerteeinheit der erfindungsgemäßen Lichtschrankenanordnung umfasst eine Rechnereinheit und eine zur Rechnereinheit nebengeordnete Rechnerstruktur. Der Grundgedanke der Erfindung besteht darin, dass durch diese Ausbildung der Auswerteeinheit eine Arbeitsteilung derart erzielt wird, dass in der Rechnereinheit die Auswertung von Empfangssignalen des oder der Empfänger erfolgt, um so das Objektfeststellungssignal zu generieren, welches das Ausgangssignal der Lichtschrankenanordnung bildet. Demgegenüber bildet die nebengeordnete Rechnerstruktur eine Empfangsschaltung, in der eine Registrierung, d.h. Erfassung von Empfangssignalen des oder der Empfänger erfolgt.

Ein wesentlicher Vorteil hierbei besteht darin, dass die Auswertung der Empfangssignale in der Rechnereinheit zeitlich unabhängig von dem Empfang der Empfangssignale und damit unabhängig vom Zeittakt der Erfassung der Empfangssignale in der nebengeordneten Rechnerstruktur erfolgen kann.

Damit können die Zeitintervalle der Auswertung von Empfangssignalen unabhängig vom Zeittakt der Registrierung der Empfangssignale vorgegeben werden, um so die Reaktionszeit bei der Generierung des Objektfeststellungssignals zu verkürzen.

Auch weitere Arbeitsprozesse in der Rechnereinheit, wie z.B. die Durchführung von Diagnosefunktionen oder die Ansteuerung von Anzeigemitteln, Ein-/ Ausgabemitteln, Schnittstellen und dergleichen, können unabhängig vom Zeittakt der Empfangssignalregistrierung in der nebengeordneten Rechnerstruktur vorgegeben und durchgeführt werden, wodurch eine weitere Reduzierung der Reaktionszeit bei der Generierung des Objektfeststellungssignals erhalten wird.

Insbesondere ist es nicht mehr erforderlich die gesamte Auswertung der Empfangssignale an den Empfang dieser Empfangssignale direkt anzuschließen, so dass dann erst nach erfolgter Auswertung der oder ein Sender wieder von neuem Lichtpulse emittieren kann, die dann in einem nächsten Zyklus ausgewertet werden. Dadurch wird eine erhebliche Verkürzung der Reaktionszeit bei der Generierung des Objektfeststellungssignals erzielt.

Gemäß einer vorteilhaften Ausführungsform sendet der oder jeder Sender in aufeinanderfolgenden Sendezeitfenstern jeweils einen Lichtpuls oder eine Folge von Lichtpulsen aus. In der nebengeordneten Rechnerstruktur werden innerhalb von durch den Zeittakt bestimmten Empfangszeitfenstern die von einem Lichtpuls oder einer Folge von Lichtpulsen generierten Empfangssignale registriert.

Gemäß einer ersten Ausgestaltung ist die Lichtschrankenanordnung als Einweg-Lichtschranke oder Reflexions-Lichtschranke ausgebildet und weist daher nur einen Sender und einen Empfänger auf.

In diesem Fall emittiert der Sender wiederholt in jeweils einem Sendezeitfenster einen Lichtpuls oder eine Folge von Lichtpulsen.

Gemäß einer weiteren Ausgestaltung ist die Lichtschrankenanordnung ein Lichtvorhang oder ein Reflexions-Lichtvorhang mit mehreren Sender-Empfänger-Paaren, wobei vorteilhaft die Sender-Empfänger-Paare zyklisch einzeln nacheinander aktiviert werden.

Gemäß einer ersten vorteilhaften Ausführungsform erfolgt im Anschluss des Empfangs eines Lichtpulses oder einer Folge von Lichtpulsen innerhalb eines Empfangszeitfensters ein erster Teil der Auswertung der dadurch generierten Empfangssignale. Ein zweiter Teil der Auswertung erfolgt während des darauffolgenden Empfangszeitfensters.

Der erste Teil der Auswertung von Empfangssignalen erfolgt im Anschluss an das Empfangszeitfenster, in dem diese auch registriert werden.

Die finale restliche Auswertung aller Empfangssignale, die zur Generierung des Objektfeststellungssignals führt, wird dann im zweiten Teil der Auswertung in das nächste Empfangszeitfenster verlagert.

Durch eine geeignete Aufteilung der Auswertung in den ersten und zweiten Teil werden die Empfangszeitfenster nicht nennenswert erhöht.

Gemäß einer zweiten vorteilhaften Ausführungsform werden während des Empfangs eines Lichtpulses oder einer Folge von Lichtpulsen innerhalb eines Empfangszeitfensters generierte Empfangssignale während des darauffolgen Empfangszeitfensters ausgewertet.

In diesem Fall wird die Auswertung von Empfangssignalen, die in einem Empfangszeitfenster registriert, d.h. erfasst werden, komplett in das nächste Empfangszeitfenster verlagert. Das erste Empfangszeitfenster wird damit durch die Auswertung nicht verlängert. Auch das folgende Empfangszeitfenster wird durch die Auswertung an Empfangssignale des vorigen Empfangszeitfensters nicht nennenswert verlängert, da die diese parallel zur Registrierung der Empfangssignale ablaufen kann.

Gemäß einer vorteilhaften Weiterbildung werden während der Registrierung von Empfangssignalen in der nebengeordneten Rechnerstruktur in der Rechnereinheit weitere Arbeitsprozesse durchgeführt.

Dabei sind die weiteren Arbeitsprozesse die Durchführung von Diagnosemaßnahmen und/oder Ansteuerungen von Anzeigemitteln, Ein-/Ausgabemitteln, und/oder Schnittstellen.

Die weiteren Arbeitsprozesse können in der Rechnereinheit während der einzelnen Empfangszeitfenster abgearbeitet werden, ohne dass dadurch die Empfangszeitfenster vergrößert werden müssen, d.h. die Reaktionszeit zur Generierung des Objektfeststellungssignals wird dadurch nicht erhöht.

Gemäß einer vorteilhaften konstruktiven Ausgestaltung weist die nebengeordnete Rechnerstruktur eine SPI-Schnittstelle, einen DMA (direct memory access) und eine Speichereinheit auf.

Die Funktionsweise dieser nebengeordneten Rechnerstruktur ist derart, dass in einem Komparator digitalisierte Empfangssignale in der SPI-Schnittstelle in einen kontinuierlichen digitalen Datenstrom gewandelt werden und über den DMA der Speichereinheit zugeführt werden. In der Speichereinheit gespeicherte Daten werden der Rechnereinheit zugeführt.

Dabei steuert die Rechnereinheit den Zeittakt der nebengeordneten Rechnerstruktur.

Die Rechnereinheit gibt hierzu die Größe der Empfangszeitfenster vor, wobei deren Größen im DMA hinterlegt sind.

Die SPI-Schnittstelle tastet das im Komparator digitalisierte Empfangssignal mit einer vorgegebenen Abtastrate ab, wobei die Konfigurierung der SPI-Schnittstelle und insbesondere die Festlegung der Abtastrate über die Rechnereinheit erfolgt.

Der DMA, der auch über die Rechnereinheit konfigurierbar ist, legt die Datenmenge fest, die bei der Registrierung des Empfangssignals innerhalb des jeweiligen Empfangszeitfensters erhalten wird.

Der DMA schiebt die Daten in die Speichereinheit. Während dieses Vorgangs ist die Rechnereinheit frei um andere Prozesse, insbesondere die weiteren Arbeitsprozesse durchzuführen.

Sobald das Einschreiben der Daten mittels des DMA in die Speichereinheit abgeschlossen ist, benachrichtigt der DMA die Rechnereinheit, so dass anhand dessen in der Rechnereinheit durchzuführende Prozesse, insbesondere Zeitintervalle für die Auswertung von Empfangssignalen zeitlich festgelegt werden.

Die in der Speichereinheit gespeicherten Daten können dann zur Auswertung und zur Generierung des Objektfeststellungssignals von der Rechnereinheit eingelesen werden.

Besonders vorteilhaft sind Synchronisationsmittel vorhanden, mittels derer Zeitintervalle der Auswertung in der Rechnereinheit vorgegeben werden.

Vorteilhaft sind die Synchronisationsmittel von einem Hardware-Timer für die Rechnereinheit ausgebildet.

Die Funktionsweise der Synchronisationsmittel ist dabei vorteilhaft derart, dass anhand dieser Synchronisationsmittel die Rechnereinheit erkennt, wie weit die Registrierung der Empfangssignale in den nebengeordneten Rechnerstrukturen fortgeschritten ist und abhängig hiervon die Zeitintervalle für die Auswertung der Empfangssignale festgelegt.

Gemäß einer vorteilhaften Ausgestaltung ist die erfindungsgemäße Lichtschrankenanordnung ein Sicherheitssensor und weist hierzu einen fehlersicheren Aufbau auf. Damit kann die Lichtschrankenanordnung in sicherheitstechnischen Applikationen, insbesondere im Bereich des Personenschutzes eingesetzt werden. Der fehlersichere Aufbau der Lichtschrankenanordnung kann insbesondere durch einen mehrkanaligen, redundanten Aufbau der Auswerteeinheit, beispielsweise mit zwei sich zyklisch überwachenden Rechnerstrukturen, realisiert werden.

Die Erfindung wird im Folgenden anhand der Zeichnungen erläutert. Es zeigen:
- Figur 1:: Ausführungsform der erfindungsgemäßen Lichtschrankenanordnung in Form einer Einweglichtschranke.
- Figur 2:: Ausführungsform der erfindungsgemäßen Lichtschrankenanordnung in Form eines Lichtvorhangs.
- Figur 3:: Ausführungsform der erfindungsgemäßen Lichtschrankenanordnung in Form einer Reflexions-Lichtschranke.
- Figur 4:: Ausführungsform der erfindungsgemäßen Lichtschrankenanordnung in Form eines Reflexions-Lichtvorhangs.
- Figur 5:: Blockschaltbild einer Auswerteeinheit für die Lichtschrankenanordnung.
- Figur 6:: Zeitdiagramm für den Empfang und die Auswertung von Empfangssignalen bei einer Lichtschrankenanordnung gemäß dem Stand der Technik.
- Figur 7:: Erstes Zeitdiagramm für den Empfang und die Auswertung von Empfangssignalen bei der erfindungsgemäßen Lichtschrankenanordnung.
- Figur 8:: Zweites Zeitdiagramm für den Empfang und die Auswertung von Empfangssignalen bei einer Lichtschrankenanordnung.

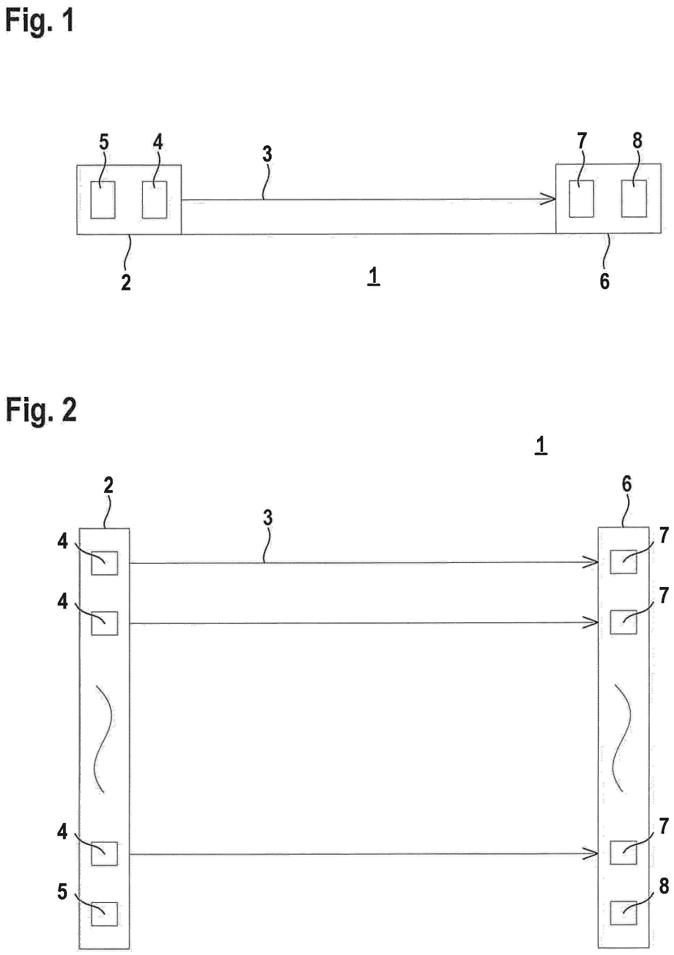

Figur 1 zeigt eine erste Ausführungsform der erfindungsgemäßen Lichtschrankenanordnung 1 in Form einer Einweglichtschranke.

Die Einweglichtschranke weist eine in einem ersten Gehäuse 2 integrierte Sendereinheit mit einem Lichtstrahlen 3 emittierenden Sender 4 in Form einer Leuchtdiode auf. Der Sender 4 emittiert Lichtstrahlen 3 in Form von Pulsfolgen von Lichtpulsen. Der Senderbetrieb wird von einer Steuereinheit 5 gesteuert. Weiterhin ist eine in einem zweiten Gehäuse 6 integrierte Empfängereinheit mit einem Empfänger 7 in Form einer Photodiode vorgesehen. Die Empfangssignale des Empfängers 7 werden in einer Auswerteeinheit 8 ausgewertet.

Die Sendereinheit und die Empfängereinheit sind an gegenüberliegenden Rändern eines Überwachungsbereichs angeordnet. Bei freiem Überwachungsbereich treffen die Lichtstrahlen 3 des Senders 4 ungehindert auf den Empfänger 7. Bei einem im Überwachungsbereich vorhandenen Objekt wird durch dieses der Strahlengang der Lichtstrahlen 3 zumindest teilweise unterbrochen. Die dabei erhaltenen Empfangssignale werden zur Generierung eines binären Objektfeststellsignals als Ausgangssignal der Einweglichtschranke ausgewertet. Die Schaltzustände des Objektfeststellungssignals geben an, ob ein Objekt im Überwachungsbereich vorhanden ist oder nicht.

Figur 2 zeigt eine Ausführungsform der erfindungsgemäßen Lichtschrankenanordnung 1 in Form eines Lichtvorhangs.

Der Lichtvorhang weist eine in einem Gehäuse 2 integrierte Sendereinheit mit einer Anordnung von Lichtstrahlen 3 emittierenden Sendern 4 in Form von Leuchtdioden auf, die von einer Steuereinheit 5 gesteuert werden. Die Sender 4 emittieren wieder Lichtstrahlen 3 in Form von Pulsfolgen von Lichtpulsen. Einer in einem Gehäuse 6 integrierten Empfängereinheit ist eine Anordnung von Empfängern 7 in Form von Photodioden vorgesehen, deren Empfangssignale in einer Auswerteeinheit 8 ausgewertet werden.

Jeweils ein Sender 4 ist einem Empfänger 7 gegenüberliegend angeordnet und bildet mit diesem ein Sender-Empfänger-Paar und damit eine Strahlachse des Lichtvorhangs. Bei freiem Überwachungsbereich gelangen die Lichtstrahlen 3 jedes Senders 4 ungehindert zum Empfänger 7 deren Strahlachse. Bei einem im Überwachungsbereich vorhandenen Objekt werden die Lichtstrahlen 3 wenigstens eines Senders 4 unterbrochen. In Abhängigkeit der Empfangssignale generiert die Auswerteeinheit 8 ein binäres Objektfeststellungssignal. Das Objektfeststellungssignal nimmt den Schaltzustand "freier Überwachungsbereich" an, wenn keine der Strahlachsen unterbrochen ist. Weiterhin nimmt das Objektfeststellungssignal den Schaltzustand "Objekt vorhanden" an, wenn wenigstens eine Strahlachse unterbrochen ist.

Mittels der Lichtstrahlen 3 einer der Strahlachsen des Lichtvorhangs erfolgt eine optische Synchronisation des Sender- und Empfängerbetriebs.

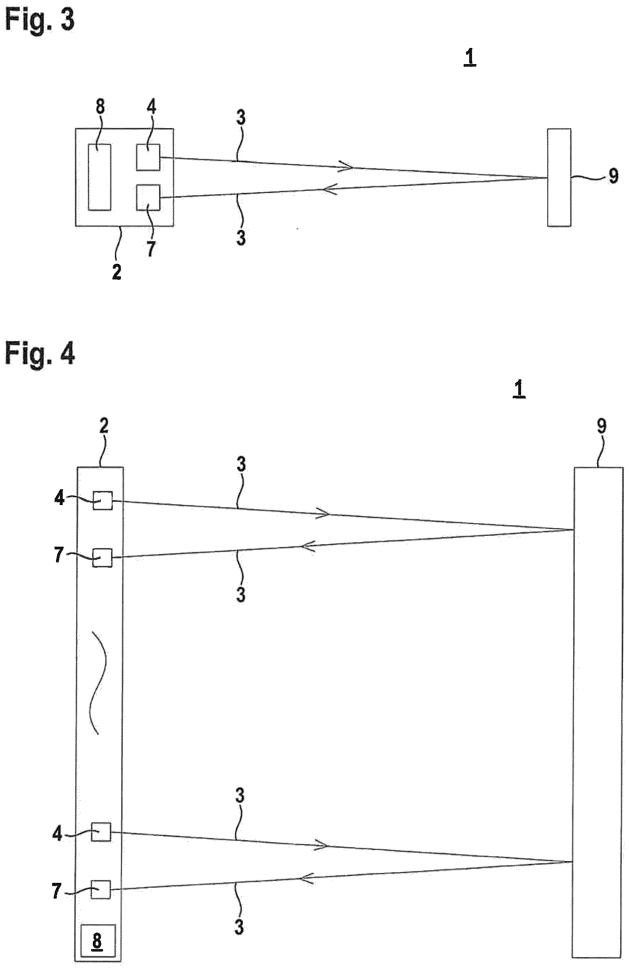

Figur 3 zeigt eine Ausführungsform der erfindungsgemäßen Lichtschrankenanordnung 1 in Form einer Reflexions-Lichtschranke. Bei dieser Ausführungsform ist eine Sender-Empfänger-Einheit vorhanden, in deren Gehäuse 2 ein Sender 4, ein Empfänger 7 und die Auswerteeinheit 8 angeordnet sind. Die Auswerteeinheit 8 übernimmt die Ansteuerung des Senders 4 und die Registrierung und Auswertung der Empfangssignale des Empfängers 7.

Die Sender-Empfänger-Einheit befindet sich an einem Rand des Überwachungsbereichs. Am gegenüberliegenden Rand des Überwachungsbereichs befindet sich ein Reflektor 9, insbesondere ein Retroreflektor.

Bei freiem Überwachungsbereich werden die Lichtstrahlen 3 durch den Überwachungsbereich geführt, am Reflektor 9 reflektiert und von dort zurück zum Empfänger 7 geführt. Bei einem Objekteingriff erfolgt eine Strahlunterbrechung der Lichtstrahlen 3.

Ansonsten entspricht die Funktion der Reflexions-Lichtschranke der Einweg-Lichtschranke gemäß Figur 1.

Figur 4 zeigt eine Erweiterung der Ausführungsform gemäß Figur 3 dahingehend, dass mehrere Sender-Empfänger-Paare im Gehäuse 2 der Sender-Empfänger-Einheit vorhanden sind. Diese Ausführungsform bildet einen Reflexions-Lichtvorhang, dessen Funktion dem Lichtvorhang gemäß Figur 2 entspricht.

Vorteilhaft ist die erfindungsgemäße Lichtschrankenanordnung 1 ein Sicherheitssensor und weist hierzu einen fehlersicheren Aufbau auf. Damit kann die Lichtschrankenanordnung 1 in sicherheitstechnischen Applikationen, insbesondere im Bereich des Personenschutzes eingesetzt werden. Der fehlersichere Aufbau der Lichtschrankenanordnung 1 kann insbesondere durch einen mehrkanaligen, redundanten Aufbau der Auswerteeinheit 8, beispielsweise mit zwei sich zyklisch überwachenden Rechnerstrukturen, realisiert werden.

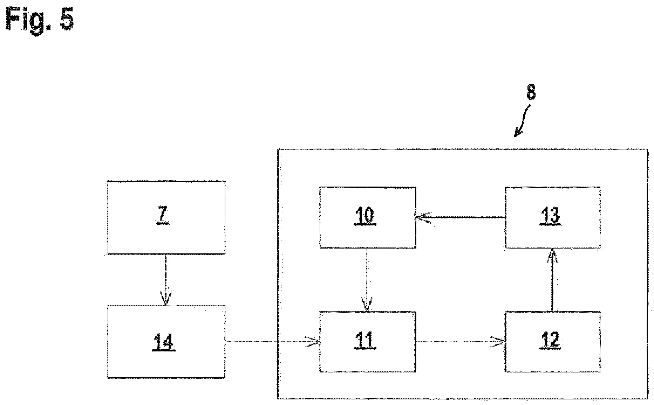

Figur 5 zeigt eine Ausführungsform der Auswerteeinheit 8 der erfindungsgemäßen Lichtschrankenanordnung 1.

Die Auswerteeinheit 8 weist generell eine Rechnereinheit auf, in der die Auswertung der Empfangssignale des oder der Empfänger 7 erfolgt. Zudem ist eine nebengeordnete Rechnerstruktur vorhanden, die eine Empfangsschaltung zur Registrierung der Empfangssignale ausbildet.

Bei der Ausführungsform gemäß Figur 5 bildet eine CPU 10 die Rechnereinheit. Die nebengeordnete Rechnerstruktur ist von einer SPI-Schnittstelle 11, einem DMA 12 (direct memory access) und einer Speichereinheit 13 gebildet.

In der Rechnereinheit ist weiterhin als Synchronisationsmittel ein Hardware-Timer vorhanden.

Die analogen Empfangssignale des oder der Empfänger 7 (von denen in Figur 5 nur einer dargestellt ist) werden mittels eines Komparators 14 digitalisiert und der SPI-Schnittstelle 11 zugeführt. Die SPI-Schnittstelle 11 wandelt die digitalisierten Empfangssignale in einen kontinuierlichen Datenstrom, der über den DMA 12 der Speichereinheit 13 zugeführt wird. Von der Speichereinheit 13 werden die dort gespeicherten Daten der CPU 10 zugeführt, wo die Auswertung der Empfangssignale zur Generierung des Objektfeststellungssignals erfolgt.

Mit der erfindungsgemäßen Auswerteeinheit 8 erfolgt eine Entkopplung der Registrierung der Empfangssignale von deren Auswertung. Die nebengeordnete Rechnerstruktur bildet eine Empfangsschaltung, in der die Empfangssignale in einem durch den Sendetakt des oder der Sender 4 bestimmten Zeittakt registriert wird. In der Rechnereinheit, d.h. in der CPU 10 erfolgt die Auswertung der Empfangssignale innerhalb vorgegebener Zeitintervalle, die erfindungsgemäß relativ zum Zeittakt des Empfangs der Empfangssignale variabel vorgegeben werden können.

Vorteilhaft sendet der oder jeder Sender 4 in aufeinanderfolgenden Sendezeitfenstern jeweils einen Lichtpuls oder eine Folge von Lichtpulsen aus. In der nebengeordneten Rechnerstruktur werden innerhalb von durch den Zeittakt bestimmten Empfangszeitfenstern die von einem Lichtpuls oder einer Folge von Lichtpulsen generierten Empfangssignale registriert.

Die Rechnereinheit gibt generell den Zeittakt der Empfangssignalregistrierung in der nebengeordneten Rechnerstruktur vor. Insbesondere gibt die Rechnereinheit abhängig vom Sendetakt, d.h. abhängig von Sendezeitfenstern in denen der oder die Sender 4 nacheinander Lichtpulse bzw. Pulsfolgen von Lichtpulsen emittieren, geeignete Empfangszeitfenster vor.

Die Rechnereinheit steuert auch den Betrieb der SPI-Schnittstelle 11 und des DMA 12, wobei diese Einheiten insbesondere durch die Rechnereinheit konfiguriert werden können.

Umgekehrt benachrichtigt der DMA 12 die Rechnereinheit, sobald die Registrierung von Empfangssignalen innerhalb eines Empfangszeitfensters abgeschlossen ist.

Abhängig hiervon definiert die Rechnereinheit die Zeitintervalle, innerhalb derer die Auswertung der Empfangssignale erfolgt, wobei hierzu vorteilhaft die Synchronisationsmittel verwendet werden.

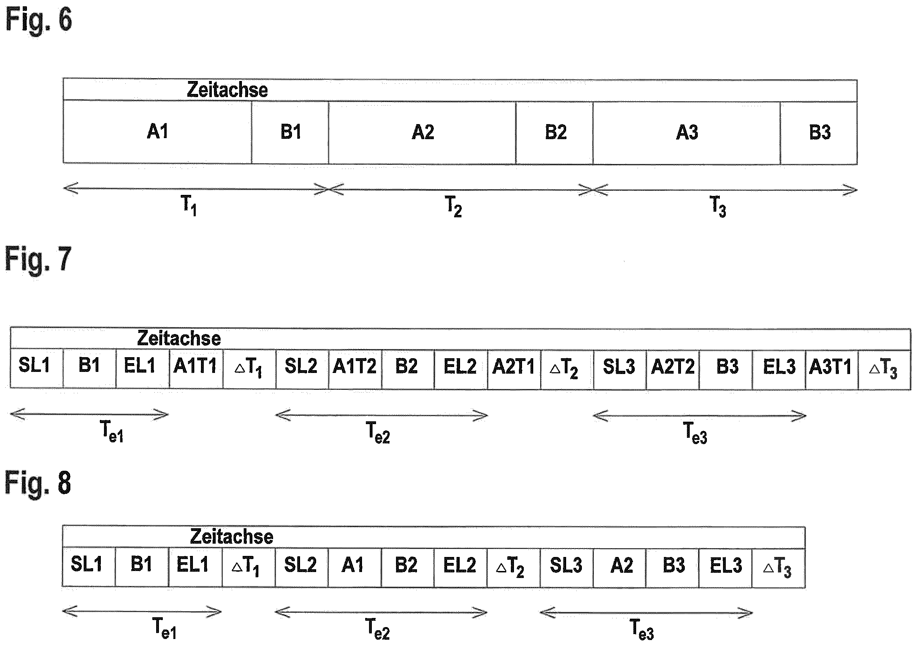

Figur 6 zeigt ein Zeitdiagramm für eine Empfangssignalverarbeitung für einen Lichtvorhang, gemäß dem Stand der Technik. Der Einfachheit halber sind dort (wie auch in den Figuren 7 und 8) nur die Verarbeitungen für drei Strahlachsen des Lichtvorhangs dargestellt.

Im Block A1 erfolgt der Empfang der Lichtpulse des ersten Senders 4 im ersten Empfänger 7 des Lichtvorhangs und daran anschließend die Auswertung der dadurch generierten Empfangssignale. Da die Auswertung der Empfangssignale erst nach deren Empfang erfolgt, beansprucht die Abarbeitung des Blocks A1 eine erhebliche Zeitspanne. Daran anschließend erfolgt in der Auswerteeinheit 8 des Lichtvorhangs die Abarbeitung weiterer Arbeitsprozesse (Block B1).

Insbesondere sind die weiteren Arbeitsprozesse die Durchführung von Diagnosemaßnahmen und/oder Ansteuerungen von Anzeigemitteln, Ein-/Ausgabemitteln, und/oder Schnittstellen.

Die Empfangssignalverarbeitung für die zweite Strahlachse (Blöcke A2, B2) und die dritte Strahlachse (Blöcke A3, B3) sind entsprechend ausgebildet.

Dadurch, dass sich an den Empfang der Lichtpulse einer Strahlachse die Auswertung dieser Lichtpulse und zudem die Durchführung der weiteren Arbeitsprozesse anschließen, werden hierfür große Zeitdauern T1, T2, T3 d.h. zeitliche Strahlabstände beansprucht d.h. es vergeht eine große Zeitspanne bis alle Strahlachsen des Lichtvorhangs ausgewertet und das Objektfeststellungssignal generiert wird, d.h. der Lichtvorhang weist eine unerwünscht hohe Reaktionszeit auf.

Figur 7 zeigt ein erstes Zeitdiagramm für ein erstes Ausführungsbeispiel der erfindungsgemäßen Empfangssignalverarbeitung.

In Figur 7 ist mit SL1 (bzw. SL2, SL3) der Start des Empfangs des ersten Lichtpulses der ersten Strahlachse (bzw. zweiten und dritten Strahlachse) bezeichnet. Weiterhin ist in Figur 7 mit EL1 (bzw. EL2, EL3) das Ende des Empfangs des Lichtpulses für die erste Strahlachse (bzw. zweite und dritte Strahlachse) bezeichnet. Dementsprechend bezeichnen Tₑ₁, Tₑ₂, Tₑ₃ Empfangszeitfenster d.h. die Zeitspannen des Empfangs der Lichtpulse, d.h. der Registrierung der entsprechenden Empfangssignale, die in der nebengeordneten Rechnerstruktur durchgeführt wird. Diese Bezeichnungen gelten auch für das Ausführungsbeispiel gemäß Figur 8.

Erfindungsgemäß erfolgt die Abarbeitung der weiteren Arbeitsprozesse (Blöcke B1, B2, B3) nicht in der nebengeordneten Rechnerstruktur, sondern unabhängig von dieser in der CPU 10. Daher können die Blöcke B1, B2, B3 während des Registrierens der Empfangssignale in der nebengeordneten Rechnerstruktur parallel in der CPU 10 während des Empfangs der Lichtpulse, d.h. innerhalb der Empfangszeitfenster Te1, Te2, Te3, durchgeführt werden.

Im Anschluss an den Empfang der Lichtpulse der ersten Strahlachse erfolgt gemäß einer ersten Variante der Erfindung nicht die gesamte Auswertung der Empfangssignale, sondern nur ein Teil hiervon (Block A1T1). Die restliche Auswertung wird innerhalb des Empfangszeitfensters Tₑ₂ durchgeführt (Block A1T2), also während des Registrierens der Empfangssignale der zweiten Strahlachse.

Entsprechend erfolgt nach dem Empfang der Lichtpuls der zweiten Strahlachse (Empfangszeitfenster Tₑ₂) nur ein Teil der Auswertung der dabei registrierten Empfangssignale (Block A2T1), während der restliche Teil der Auswertung (Block A2T2) während des Empfangs der Lichtpulse der dritten Strahlachse erfolgt.

Dies setzt sich entsprechend für die Auswertung der Lichtpulse der dritten Strahlachse fort.

An die Blöcke A1T1, A2T1, A3T1 schließen optional kurze Zeitintervalle ΔT1, ΔT2, ΔT3 an, in welchen weitere Arbeitsprozesse in der CPU 10 abgearbeitet werden können.

Dadurch, dass auf den Empfang der Lichtpulse (Empfangszeitfenster Tₑ₁, Tₑ₂, Tₑ₃) nur ein Teil der Auswertung von Empfangssignalen erfolgt (Blöcke A1T1, A2T1, A3T1), die nur wenig Zeit beanspruchen, werden die Empfangszeitfenster zum Empfang der Lichtpulse durch die Auswertungen nicht nennenswert verlängert, wodurch eine erheblich verkürzte Reaktionszeit bei der Generierung des Objektfeststellungssignals gegenüber der aus dem Stand der Technik bekannten Reaktionszeit erreicht wird.

Figur 8 zeigt ein Zeitdiagramm für ein zweites Ausführungsbeispiel der erfindungsgemäßen Empfangssignalverarbeitung.

Diese Ausführungsform unterscheidet sich von der Ausführungsform gemäß Figur 7 dadurch, dass die Auswertung der während des im Empfangszeitfenster Tₑ₁ registrierten Empfangssignale (Block A1) komplett in das Empfangszeitfenster Tₑ₂ des Empfangs der Lichtpulse der zweiten Strahlachse geschoben wird. Dies ist möglich, da die Auswertung der Empfangssignale in der CPU 10 erfolgt, während die Registrierung der Empfangssignale in der nebengeordneten Rechnerstruktur erfolgt.

Entsprechend erfolgt die Auswertung der Lichtpulse der zweiten Strahlachse (Block A2) die während Tₑ₂ registriert werden im Empfangszeitfenster Tₑ₃, d.h. während des Empfangs der Lichtpulse der dritten Strahlachse.

Dadurch werden die Zeitspannen, d.h. Empfangszeitfenster Tₑ₁, Tₑ₂, Tₑ₃ durch die Auswertungen der Empfangssignale (Blöcke A1, A2, A3) nicht verlängert, wodurch eine besonders kurze Reaktionszeit bei der Generierung des Objektfeststellungssignal erhalten wird.

### Bezugszeichenliste

- (1): Lichtschrankenanordnung
- (2): Gehäuse
- (3): Lichtstrahl
- (4): Sender
- (5): Steuereinheit
- (6): Gehäuse
- (7): Empfänger
- (8): Auswerteeinheit
- (9): Reflektor
- (10): CPU
- (11): SPI-Schnittstelle
- (12): DMA (direct memory access)
- (13): Speichereinheit
- (14): Komparator

## Patentansprüche

1. Lichtschrankenanordnung (1) zur Erfassung von Objekten in einem Überwachungsbereich, mit wenigstens einem Sender (4), der Lichtstrahlen (3) in Form von Lichtpulsen emittiert, mit wenigstens einem Empfänger (7), wobei bei freiem Überwachungsbereich vom Sender (4) emittierte Lichtstrahlen (3) auf den Empfänger (7) geführt sind, und wobei bei einem Objekteingriff im Überwachungsbereich eine Strahlunterbrechung der Lichtstrahlen (3) vorliegt, und mit einer Auswerteeinheit (8), in welcher in Abhängigkeit von Empfangssignalen des Empfängers (7) ein Objektfeststellungssignal generiert wird, wobei die Auswerteeinheit (8) eine Rechnereinheit und eine der Rechnereinheit nebengeordnete Rechnerstruktur aufweist, wobei die nebengeordnete Rechnerstruktur eine Empfangsschaltung aufweist, in welcher Empfangssignale in einem durch die Lichtpulse bestimmten Zeittakt erfasst werden , **dadurch gekennzeichnet, dass** in der Auswerteeinheit (8) in Zeitintervallen, die unabhängig vom Zeittakt der Erfassung der Empfangssignale vorgegeben sind, die Auswertung der Empfangssignale und die Generierung des Objektfeststellungssignals erfolgt.

2. Lichtschrankenanordnung (1) nach Anspruch 1 **dadurch gekennzeichnet, dass** der oder jeder Sender (4) in aufeinanderfolgenden Sendezeitfenstern jeweils einen Lichtpuls oder eine Folge von Lichtpulsen aussendet, und dass in der nebengeordneten Rechnerstruktur innerhalb von durch den Zeittakt bestimmten Empfangszeitfenstern die von einem Lichtpuls oder einer Folge von Lichtpulsen generierten Empfangssignale registriert werden.

3. Lichtschrankenanordnung (1) nach Anspruch 2, **dadurch gekennzeichnet, dass** im Anschluss des Empfangs eines Lichtpulses oder einer Folge von Lichtpulsen innerhalb eines Empfangszeitfensters ein erster Teil der Auswertung der dadurch generierten Empfangssignale erfolgt, und dass ein zweiter Teil der Auswertung während des darauffolgenden Empfangszeitfensters erfolgt.

4. Lichtschrankenanordnung (1) nach Anspruch 2, **dadurch gekennzeichnet, dass** während des Empfangs eines Lichtpulses oder einer Folge von Lichtpulsen innerhalb eines Empfangszeitfensters generierte Empfangssignale während des darauffolgen Empfangszeitfensters ausgewertet werden.

5. Lichtschrankenanordnung (1) nach einem der Ansprüche 1 bis 4, **dadurch gekennzeichnet, dass** während der Registrierung von Empfangssignalen in der nebengeordneten Rechnerstruktur in der Rechnereinheit weitere Arbeitsprozesse durchgeführt werden.

6. Lichtschrankenanordnung (1) nach Anspruch 5, **dadurch gekennzeichnet, dass** die weiteren Arbeitsprozesse die Durchführung von Diagnosemaßnahmen und/oder Ansteuerungen von Anzeigemitteln, Ein-/Ausgabemitteln und/oder Schnittstellen sind.

7. Lichtschrankenanordnung (1) nach einem der Ansprüche 1 bis 6, **dadurch gekennzeichnet, dass** die nebengeordnete Rechnerstruktur eine SPI-Schnittstelle (11), einen DMA (12) und eine Speichereinheit (13) aufweist.

8. Lichtschrankenanordnung (1) nach Anspruch 7, **dadurch gekennzeichnet, dass** in einem Komparator (14) digitalisierte Empfangssignale in der SPI-Schnittstelle (11) in einen kontinuierlichen digitalen Datenstrom gewandelt werden und über den DMA (12) der Speichereinheit (13) zugeführt werden, wobei in der Speichereinheit (13) gespeicherte Daten der Rechnereinheit zugeführt werden.

9. Lichtschrankenanordnung (1) nach einem der Ansprüche 6 bis 8, **dadurch gekennzeichnet, dass** die Rechnereinheit den Zeittakt der nebengeordneten Rechnerstruktur steuert.

10. Lichtschrankenanordnung (1) nach einem der Ansprüche 6 bis 9, **dadurch gekennzeichnet, dass** die Rechnereinheit den DMA (12) und die SPI-Schnittstelle (11) konfiguriert.

11. Lichtschrankenanordnung (1) nach einem der Ansprüche 7 bis 10, **dadurch gekennzeichnet, dass** der DMA (12) die Rechnereinheit benachrichtigt, sobald die Registrierung von Empfangssignalen innerhalb eines Empfangszeitfensters abgeschlossen ist.

12. Lichtschrankenanordnung (1) nach einem der Ansprüche 1 bis 10, **dadurch gekennzeichnet, dass** Synchronisationsmittel vorhanden sind, mittels derer Zeitintervalle der Auswertung in der Rechnereinheit vorgegeben werden, oder dass die Rechnereinheit den zeitlichen Fortschritt des Empfangszeitfensters ermitteln kann.

13. Lichtschrankenanordnung (1) nach Anspruch 11, **dadurch gekennzeichnet, dass** die Synchronisationsmittel von einem Hardware-Timer für die Rechnereinheit ausgebildet sind.

14. Lichtschrankenanordnung (1) nach einem der Ansprüche 1 bis 12, **dadurch gekennzeichnet, dass** diese eine Einweg-Lichtschranke oder eine Reflexions-Lichtschranke mit nur einem Sender (4) und nur einem Empfänger (7) ist.

15. Lichtschrankenanordnung (1) nach einem der Ansprüche 1 bis 12, **dadurch gekennzeichnet, dass** diese ein Lichtvorhang oder ein Reflexions-Lichtvorhang mit mehreren Sender-Empfänger-Paaren ist, wobei insbesondere die Sender-Empfänger-Paare zyklisch einzeln nacheinander aktiviert werden.

## Claims

1. A light barrier arrangement (1) for detecting objects within a monitoring area, comprising at least one transmitter (4) which emits light beams (3) in the form of light pulses, and at least one receiver (7), wherein, when the monitoring area is clear, light beams (3) emitted by the transmitter (4) are directed onto the receiver (7), and wherein, when an object enters the monitoring area, the light beams (3) are interrupted, and comprising an evaluation unit (8), in which an object detection signal is generated in response to reception signals from the receiver (7),
wherein the evaluation unit (8) comprises a computer unit and a computer structure arranged in parallel with the computer unit, wherein the parallel computer structure comprises a receiver circuit in which received signals are detected at a timing determined by the light pulses,
**characterised in that**, within the evaluation unit (8), the evaluation of the received signals and the generation of the object detection signal take place at time intervals which are predetermined independently of the timing of the detection of the received signals.

2. A light barrier arrangement (1) according to claim 1, **characterised in that** the or each transmitter (4) emits a light pulse or a sequence of light pulses in successive transmission time windows, and **in that**, within the associated computer structure, the received signals generated by a light pulse or a sequence of light pulses are registered within reception time windows determined by the time clock.

3. A light barrier arrangement (1) according to claim 2, **characterised in that**, following the reception of a light pulse or a sequence of light pulses within a reception time window, a first part of the evaluation of the reception signals generated thereby takes place, and that a second part of the evaluation takes place during the subsequent reception time window.

4. A light barrier arrangement (1) according to claim 2, **characterised in that** reception signals generated during the reception of a light pulse or a sequence of light pulses within a reception time window are evaluated during the subsequent reception time window.

5. A light barrier arrangement (1) according to any one of claims 1 to 4, **characterised in that**, whilst reception signals are being recorded, further processing operations are carried out in the associated computer structure within the computer unit.

6. A light barrier arrangement (1) according to claim 5, **characterised in that** the further processes comprise the performance of diagnostic measures and/or the control of display means, input/output means and/or interfaces.

7. A light barrier arrangement (1) according to any one of claims 1 to 6, **characterised in that** the associated computer structure comprises an SPI interface (11), a DMA (12) and a memory unit (13).

8. A photoelectric sensor arrangement (1) according to claim 7, **characterised in that** digitised received signals in the SPI interface (11) are converted into a continuous digital data stream in a comparator (14) and fed to the memory unit (13) via the DMA (12), whereby data stored in the memory unit (13) is fed to the computer unit.

9. A photoelectric sensor arrangement (1) according to any one of claims 6 to 8, **characterised in that** the computing unit controls the clock signal of the associated computing structure.

10. A photoelectric barrier arrangement (1) according to any one of claims 6 to 9, **characterised in that** the computing unit configures the DMA (12) and the SPI interface (11).

11. A photoelectric sensor arrangement (1) according to any one of claims 7 to 10, **characterised in that** the DMA (12) notifies the computing unit as soon as the registration of received signals within a reception time window is complete.

12. A photoelectric barrier arrangement (1) according to any one of claims 1 to 10, **characterised in that** synchronisation means are provided, by means of which time intervals for the evaluation in the computing unit are specified, or **in that** the computing unit is able to determine the temporal progression of the reception time window.

13. A light barrier arrangement (1) according to claim 11, **characterised in that** the synchronisation means are formed by a hardware timer for the computer unit.

14. A light barrier arrangement (1) according to any one of claims 1 to 12, **characterised in that** it is a through-beam light barrier or a reflective light barrier with only one transmitter (4) and only one receiver (7).

15. A light barrier arrangement (1) according to any one of claims 1 to 12, **characterised in that** it is a light curtain or a reflective light curtain comprising a plurality of transmitter-receiver pairs, wherein, in particular, the transmitter-receiver pairs are activated cyclically, one after the other.

## Revendications

1. Dispositif à barrière lumineuse (1) destiné à la détection d'objets dans une zone de surveillance, comprenant au moins un émetteur (4) qui émet des faisceaux lumineux (3) sous forme d'impulsions lumineuses, et au moins un récepteur (7), dans lequel, lorsque la zone de surveillance est libre, les faisceaux lumineux (3) émis par l'émetteur (4) sont dirigés vers le récepteur (7), et dans lequel, lorsqu'un objet pénètre dans la zone de surveillance, il se produit une interruption des faisceaux lumineux (3), et comprenant une unité d'évaluation (8), dans laquelle un signal de détection d'objet est généré en fonction des signaux de réception du récepteur (7),
l'unité d'évaluation (8) comportant une unité de calcul et une structure informatique associée à l'unité de calcul, la structure informatique associée comportant un circuit de réception dans lequel les signaux de réception sont détectés selon une cadence déterminée par les impulsions lumineuses,
**caractérisé en ce que**, dans l'unité d'évaluation (8), l'évaluation des signaux de réception et la génération du signal de détection d'objet s'effectuent à des intervalles de temps prédéfinis indépendamment de la cadence de détection des signaux de réception.

2. Ensemble barrière lumineuse (1) selon la revendication 1, **caractérisé en ce que** le ou chaque émetteur (4) émet, dans des fenêtres de temps d'émission successives, respectivement une impulsion lumineuse ou une séquence d'impulsions lumineuses, et **en ce que**, dans la structure informatique associée, les signaux de réception générés par une impulsion lumineuse ou une séquence d'impulsions lumineuses sont enregistrés à l'intérieur de fenêtres de temps de réception déterminées par la cadence.

3. Dispositif de barrières optiques (1) selon la revendication 2, **caractérisé en ce qu'**à la suite de la réception d'une impulsion lumineuse ou d'une séquence d'impulsions lumineuses au sein d'une fenêtre de temps de réception, une première partie de l'évaluation des signaux de réception ainsi générés a lieu, et **en ce qu'**une seconde partie de l'évaluation a lieu pendant la fenêtre de temps de réception suivante.

4. Dispositif de barrière optique (1) selon la revendication 2, **caractérisé en ce que** les signaux de réception générés pendant la réception d'une impulsion lumineuse ou d'une série d'impulsions lumineuses au sein d'une fenêtre de temps de réception sont évalués pendant la fenêtre de temps de réception suivante.

5. Dispositif de barrière optique (1) selon l'une des revendications 1 à 4, **caractérisé en ce que**, pendant l'enregistrement des signaux de réception dans la structure informatique associée au sein de l'unité informatique, d'autres processus de travail sont exécutés.

6. Ensemble barrière lumineuse (1) selon la revendication 5, **caractérisé en ce que** les autres processus de travail consistent en la mise en œuvre de mesures de diagnostic et/ou en la commande de moyens d'affichage, de moyens d'entrée/sortie et/ou d'interfaces.

7. Ensemble barrière lumineuse (1) selon l'une des revendications 1 à 6, **caractérisé en ce que** la structure informatique associée comporte une interface SPI (11), un DMA (12) et une unité de mémoire (13).

8. Ensemble barrière lumineuse (1) selon la revendication 7, **caractérisé en ce que**, dans un comparateur (14), les signaux de réception numérisés dans l'interface SPI (11) sont convertis en un flux continu de données numériques et acheminés vers l'unité de mémoire (13) via le DMA (12), les données stockées dans l'unité de mémoire (13) étant transmises à l'unité de calcul.

9. Ensemble barrière lumineuse (1) selon l'une des revendications 6 à 8, **caractérisé en ce que** l'unité de calcul commande la cadence de la structure informatique associée.

10. Ensemble barrière lumineuse (1) selon l'une des revendications 6 à 9, **caractérisé en ce que** l'unité de calcul configure le DMA (12) et l'interface SPI (11).

11. Ensemble barrière lumineuse (1) selon l'une des revendications 7 à 10, **caractérisé en ce que** le DMA (12) informe l'unité de calcul dès que l'enregistrement des signaux de réception au sein d'une fenêtre de temps de réception est terminé.

12. Ensemble barrière lumineuse (1) selon l'une des revendications 1 à 10, **caractérisé en ce qu'**il comprend des moyens de synchronisation permettant de définir des intervalles de temps pour l'évaluation dans l'unité de calcul, ou **en ce que** l'unité de calcul est en mesure de déterminer l'évolution temporelle de la fenêtre de réception.

13. Ensemble barrière lumineuse (1) selon la revendication 11, **caractérisé en ce que** les moyens de synchronisation sont constitués d'une horloge matérielle pour l'unité de calcul.

14. Ensemble barrière lumineuse (1) selon l'une des revendications 1 à 12, **caractérisé en ce qu'**il s'agit d'une barrière lumineuse à transmission ou d'une barrière lumineuse à réflexion comportant un seul émetteur (4) et un seul récepteur (7).

15. Ensemble barrière lumineuse (1) selon l'une des revendications 1 à 12, **caractérisé en ce qu'**il s'agit d'un rideau lumineux ou d'un rideau lumineux à réflexion comportant plusieurs paires émetteur-récepteur, les paires émetteur-récepteur étant notamment activées de manière cyclique, une par une, les unes après les autres.
